# EUROPÄISCHE PATENTSCHRIFT

(11) **EP 1 744 232 B1**
(45) Veröffentlichungstag und Bekanntmachung des Hinweises auf die Patenterteilung: **03.03.2010**
(21) Anmeldenummer: 06013799.9
(22) Anmeldetag: 04.07.2006
(51) Int. Cl.: G05D 1/10, G05D 1/00

(54) **System und Verfahren zum Überführen eines Flugzeugs von einem ausserhalb eines zulässigen Flugzustandsbereichs in einen innerhalb des zulässigen Flugzustandsbereichs liegenden Flugzustand**
System and method for transferring an aircraft from a flight condition area outside a permitted flight condition area to a flight condition inside the permitted flight condition area
Système et procédé destinés à transporter un avion d'un état de vol situé à l'extérieur d'une zone de vol autorisée vers l'intérieur d'une zone de vol autorisée

(30) Priorität: 14.07.2005 DE 102005032849
(43) Veröffentlichungstag der Anmeldung: 17.01.2007
(73) Patentinhaber: EADS Deutschland GmbH, 85521 Ottobrunn (DE)
(72) Erfinder: Hanel, Martin, Dr., 85640 Putzbrunn (DE)

(56) Entgegenhaltungen:
- WO-A-2004/102296
- US-A- 5 057 834
- US-A- 5 839 080
- US-A1- 2004 044 444
- US-A1- 2004 215 372

## Beschreibung

Die Erfindung betrifft ein System und ein Verfahren zum Überführen eines Flugzeugs von einem außerhalb eines zulässigen Flugzustandsbereichs in einen innerhalb des zulässigen Flugzustandsbereichs liegenden Flugzustand.

Bei konventionellen Flugzeugen liegt das sichere Manövrieren im Bereich außerhalb der Flugbereichsgrenzen allein in der Verantwortung des Piloten. Je nach Flugzeugtyp und Einsatzhäufigkeit sind unterschiedliche Flugzeugverlustraten infolge von Grenzüberschreitungen (beispielsweise durch zu geringe Geschwindigkeit) bekannt.

Bei den meisten Starr- und Schwenkflügelflugzeugen werden die Kräfte zur Stabilisierung und Steuerung von Fluglage und Flugbahn durch Luftströmung an beweglichen Steuerflächen wie Höhenruder, Seitenruder und Querruder erzeugt. Ist zudem die Flugzeugeigendynamik instabil, werden in jeder Fluglage Steuerkräfte zur Stabilisierung der Flugzeugbewegung benötigt. Sinkt die Fluggeschwindigkeit unter ein technisch vorgegebenes, flugzeugtypisches Minimum, werden die an den Steuerflächen des Flugzeugs entstehenden Kräfte zu klein, um die Flugzeuglage und die Flugbahn noch stabil steuern zu können. Es entsteht das Risiko eines Flugzeugabsturzes, beispielsweise durch Trudeln, der in vielen Fällen vom Piloten nicht mehr abgefangen werden kann.

Zur Unterstützung des Piloten sind Systeme bekannt, die durch ein akustisches Signal auf die drohende Gefahr einer Überschreitung der Flugbereichsgrenze (beispielsweise das Erreichen einer Minimalgeschwindigkeit) aufmerksam machen. Der Pilot muss dann unverzüglich ein Abfangmanöver einleiten und es manuell durchführen.

Aus WO 2004/102296 A1 und US 2004/0215372 A1 ist ein Steuerungssystem für ein Flugzeug bekannt, welches die Flugbahn des Flugzeugs bezüglich einer vorgegebenen Flugbahn überwacht. Das Steuerungssystem übernimmt die Kontrolle des Flugzeugs sobald sich das Flugzeug auf einem Kollisionskurs befindet, entweder mit einem anderen Flugzeug oder mit einem Gebiet, welches nicht überflogen werden darf.

Aus WO 00/77586 A2 ist eine Autopilot-Steuereinrichtung bekannt zu Steuern der Bewegung eines Flugzeugs in einem Medium in einem Vor-Strömungsabriss-Bereich, einem Strömungsabriss-Bereich oder einem Nach- Strömungsabriss-Bereich. Es sind Steuerungs-Einrichtungen vorhanden, welche das Flugzeug von einem außerhalb eines zulässigen Flugzustandsbereichs in einen innerhalb des zulässigen Flugzustandsbereichs liegenden Flugzustand überführen.

Weiterhin sind generell Autopilotensysteme bekannt, die durch den Piloten eingeschaltet werden können, um bestimmte Steuer- bzw. Regelaufgaben zu übernehmen, beispielsweise die Höhen oder die Fahrtregelung.

Aus US 2004/044444 A1 ist ein System und ein Verfahren gemäß den Oberbegriffen der Ansprüche 1 bzw. 3 bekannt.

Der Erfindung liegt die Aufgabe zugrunde, die Absturzgefahr von Flugzeugen wegen Überschreitens einer flugzeugtypischen Flugbereichsgrenze merklich zu reduzieren bzw. vollends zu vermeiden.

Der allgemeine Erfindungsgedanke sieht vor, dass im Flugzeug ein Flugführungssystem installiert wird, das die Flugbereichsgrenzen überwacht, bei Überschreiten der Flugbereichsgrenzen die Steuerung des Flugzeugs übernimmt, ein Flugmanöver ausführt und dadurch das Flugzeug wieder in den zulässigen Flugbereich überführt.

Das Flugzeug soll sich ohne Einschränkungen bis an die Grenze des zulässigen Flugzustandbereichs bewegen können. Wird die Grenze überschritten, muss ein Abfangmanöver ausgeführt werden, welches das Flugzeug wieder in den zulässigen Flugzustandsbereich zurückführt. Dabei ist zu beachten, dass das Flugzeug auch während des günstigsten Abfangmanövers noch erheblich an Geschwindigkeit verlieren kann. Das Abfangmanöver muss daher bei Geschwindigkeiten deutlich oberhalb der flugzeugtypischen Mindestfluggeschwindigkeit begonnen werden. Die Grenzgeschwindigkeit des zulässigen Flugzustandsbereichs ergibt sich also nicht als feste Zahl, sondern muss in Abhängigkeit des aktuellen Flugzustands fortlaufend berechnet werden.

Da sich der Pilot im Luftkampf auf den Gegner konzentrieren soll, empfiehlt sich eine automatische Auswahl und Ausführung des Abfangmanövers.

Ein spezielles Ausführungsbeispiel der Erfindung ist das Langsamflug-Abfangsystem. Dieses System ermöglicht es, die Absturzgefahr von Flugzeugen wegen Unterschreitens der flugzeugtypischen Mindestfluggeschwindigkeit merklich zu reduzieren bzw. vollends zu vermeiden.

Erfindungsgemäß ist ein Flugführungssystem zum Überführen eines Flugzeugs von einem außerhalb eines zulässigen Flugzustandsbereichs in einen innerhalb des Flugzustandsbereichs liegenden Flugzustand vorgesehen, das einer Sensorik und einer Steuerungs-Einrichtung des Flugzeugs zugeordnet werden kann, wobei das System umfasst:
- ein Steuereingriffs-Modul (A) zur Übernahme oder Rückgabe der Steuerautorität über das Flugzeug aufgrund eines Steuerübernahmesignals (a) und zum Einspeisen von Steuervorgaben (c) bei gesetztem Steuerübernahmesignal (a);
- ein Manöverauswahl-Modul (M) zur Bereitstellung und Speicherung zumindest einer Überführungsstrategie mit zugehöriger Manöverinformation (i) und zur Auswahl einer Überführungsstrategie in Abhängigkeit von Meßgrößen (b) der Sensorik (S);
- einen Grenzwert-Generator (G) zur Berechnung der Flugbereichsgrenze (g) aufgrund von Meßgrößen (b) der Sensorik (S);
- ein Entscheidungs-Modul (E), das mit dem Grenzwert-Generator (G) und der Sensorik (S) funktional verbunden ist und von ersterem die berechnete Flugbereichsgrenze (g) sowie von letzterem die Meßgrößen (b) empfängt und das aufgrund eines Vergleichs der Flugbereichsgrenze (g) mit den Meßgrößen (b) ein Steuerübernahmesignal (a) erzeugt und an das Steuereingriffsmodul (A), den Kommando-Generator (K) und das Manöverauswahl-Modul (M) sendet;
- einen Kommando-Generator (K), der einerseits mit dem Entscheidungs-Modul (E) und dem Manöverauswahl-Modul (M) und andererseits mit dem Steuereingriffs-Modul (A) funktional verbunden ist und bei gesetztem Steuerübernahme-Signal (a) auf Basis der Manöver-Information (i) die Steuervorgaben (c) berechnet und diese an das Steuereingriffs-Modul (A) sendet.

Der Grenzwert-Generator umfasst erfindungsgemäß zusätzlich Funktionen, mit denen ein Strategiewechsel-Grenze berechnet und an das Entscheidungs-Modul geliefert werden kann, wobei das Entscheidungs-Modul zusätzlich funktional mit dem Manöverauswahl-Modul verbunden ist und diesem aufgrund des Vergleichs der Strategiewechselgrenze mit Messgrößen der Sensorik ein Strategiewechsel-Signal sendet, wodurch die gespeicherte Überführungsstrategie durch eine andere ersetzt und die Manöverinformation angepasst wird.

Der Kommando-Generator kann zusätzlich funktional mit der Sensorik verbunden sein und eine Lageregelungs-Einheit umfassen, die mit Hilfe von Messgrößen der Sensorik, die Steuervorgaben derart berechnet, dass das Flugzeug eine durch die Manöverinformation vorgegebene Fluglage einhält.

Weiterhin ist erfindungsgemäß ein Verfahren zum Überführen eines Flugzeugs von einem außerhalb eines vorgegebenen Flugzustandsbereichs in einen innerhalb des Flugzustandsbereichs liegenden Flugzustand aufgrund von Messgrößen einer Sensorik vorgesehen, das folgenden Verfahrensablauf umfasst:
a. Auswählen einer Überführungsstrategie mit zugehöriger Manöverinformation (i) in Abhängigkeit der Messgrößen (b) der Sensorik (S),
b. Berechnen (2) der Flugzustandsbereichs-Grenze (g) aus den Messgrößen (b) der Sensorik (S)
c. Vergleich (3) der Messdaten (b) der Sensorik (S) mit der Flugzustandsbereichs-Grenze (g),
d. Fortführung des Verfahrens bei Schritt a) wenn der Vergleich aus Schritt c) ergibt, daß die Flugzustandsbereichs-Grenze (g) unterschritten und bei Schritt e) wenn der Vergleich aus Schritt c) ergibt, daß die Flugzustandsbereichs-Grenze (g) überschritten ist,
e. Erzeugen eines Steuerübernahmesignals (a) zur Aktivierung eines Steuereingriffsmodul (A) zur Übernahme der Flugzeugsteuerung,
f. Erzeugen (4) einer Steuervorgabe (c) und deren Einspeisung in die Flugzeugsteuerung derart, daß das Flugzeug die ausgewählte Überführungsstrategie umsetzt,
g. Vergleich (3) der Messdaten (b) der Sensorik (S) mit der Flugzustandsbereichs-Grenze (g),
h. Fortführung des Verfahrens bei Schritt f) wenn der Vergleich aus Schritt g) ergibt, daß die Flugzustandsbereichs-Grenze (g) unterschritten und bei Schritt i) wenn der Vergleich aus Schritt g) ergibt, daß die Flugzustandsbereichs-Grenze (g) überschritten ist,
i. Erzeugen eines Steuerübernahmesignals (a) zur Deaktivierung eines Steuereingriffsmodul (A) zur Rückgabe der Flugzeugsteuerung und Fortführung des Verfahrens bei Schritt a).

Dabei kann die Flugzustandsbereichs-Grenze durch eine Grenzgeschwindigkeit dargestellt sein, die in Abhängigkeit der Messgrößen Verzögerung, Nicklagewinkel, Roll-Lagewinkel, Anstellwinkel, Schiebewinkel, Höhe über Normalnull und Flugzeugmasse berechnet wird.

Die Steuervorgabe des Kommando-Generators kann eine Anstellwinkelvorgabe, eine Schiebewinkelvorgabe und/oder eine Roll-Lageregelung umfassen.

In einem zusätzlichen Schritt kann die einmal gewählte und gespeicherte Überführungsstrategie als Reaktion auf äußere Störungen durch eine dann günstigere Überführungsstrategie ersetzt werden mit
- einer Berechnung des Strategiewechselgrenzwerts,
- einem Vergleich des Strategiewechselgrenzwerts mit Messgrößen der Sensorik, um bei Überschreiten des Strategiewechselgrenzwerts das Strategiewechselsignal zu erzeugen und
- dem Ersatz der gespeicherten Überführungsstrategie durch eine andere mit gleichzeitiger Anpassung der Manöverinformationen.

Im folgenden wird die Erfindung an Hand der beiliegenden Figuren beschrieben, die zeigen:

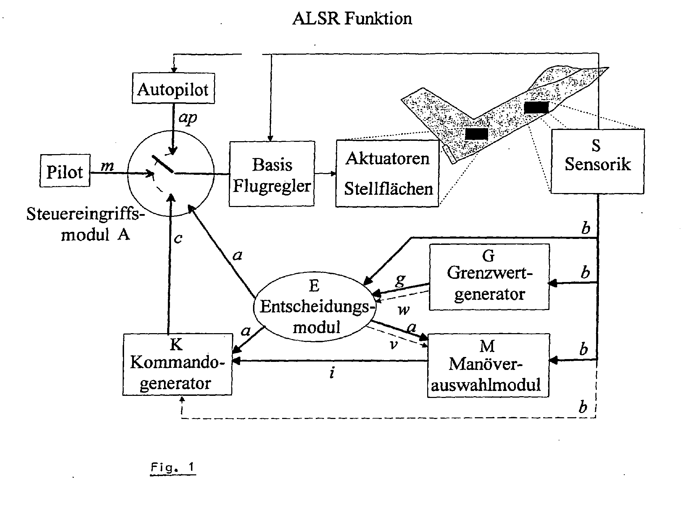

- Figur 1 die Darstellung des erfindungsgemäßen Systems,

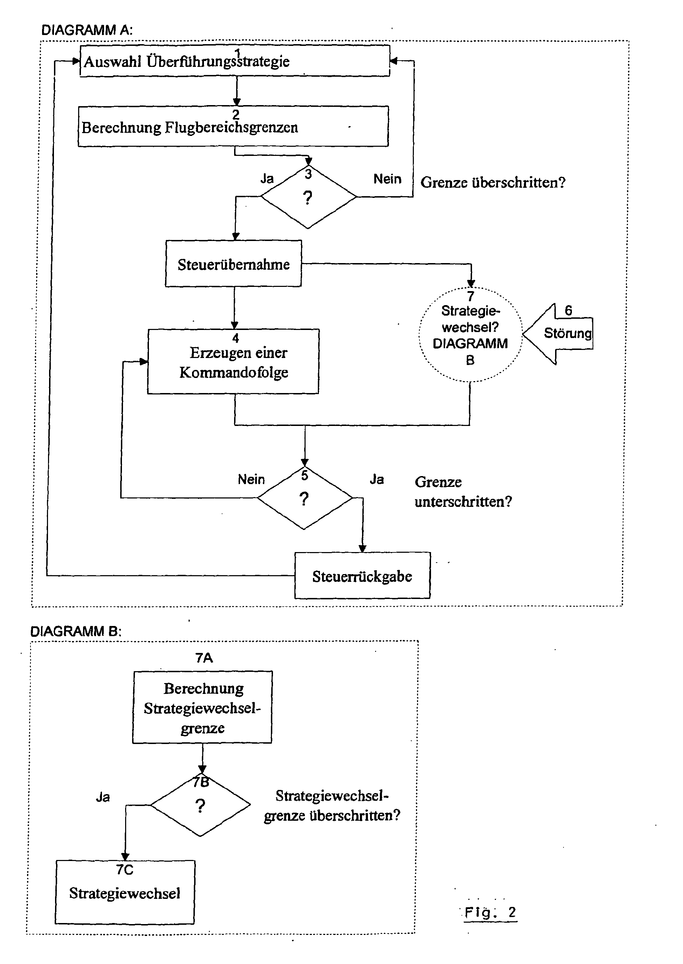

- Figur 2 die Darstellung von Schritten des erfindungsgemäßen Verfahrens.

Das erfindungsgemäße System umfasst folgende Module:

Das Steuereingriffsmodul (A) dient zur Übernahme oder Rückgabe der Steuerautorität über das Flugzeug aufgrund eines Steuerübernahmesignals (a) und zum Einspeisen von Steuervorgaben (c) bei gesetztem Steuerübernahmesignal (a). Das Steuereingriffsmodul (A) übernimmt bei Aktivierung (Steuerübernahmesignal (a) gesetzt) die Flugzeugsteuerung vom Piloten bzw. einem Autopilotensystem und gibt bei Deaktivierung (Steuerübernahmesignal (a) nicht gesetzt) die Flugzeugsteuerung an den Piloten zurück. Bei gesetztem Steuerübernahmesignal ersetzt das Steuereingriffsmodul die Steuersignale des Piloten bzw. Autopiloten durch die Steuervorgaben (c) des Systems.

Ein Manöverauswahl-Modul M dient z Bereitstellung und Speicherung zumindest einer Überführungsstrategie mit zugehöriger Manöverinformation i und zur Auswahl einer Überführungsstrategie in Abhängigkeit von Meßgrößen b der Sensorik S. Das Manöverauswahl-Modul M stellt fortlaufend mindestens eine Überführungsstrategie bereit, wählt bei mehreren Alternativen anhand der Messgrößen des aktuellen Flugzustandes die günstigste Überführungsstrategie aus 1 und speichert diese, sobald das Steuerübernahmesignal a gesetzt ist. Im Fall des speziellen Ausführungsbeispiels wird die Überführungsstrategie aus einem Manövergrundtyp (Durchziehen, Drücken oder Messerflug) sowie einer einleitenden und einer abschließenden Manöversequenz zusammengesetzt. Der Manövergrundtyp wird dabei aufgrund der gemessenen Werte des aktuellen Flugwindneigungs- und Rollagewinkels ausgewählt. Zu der ausgewählten und gespeicherten Überführungsstrategie werden Manöverinformationen i, beispielsweise Sollgrößen für Lage- und Bahngrößen, generiert und an den Kommandogenerator K geliefert. Für manche Flugzustände (Kombinationen von Flugwindneigungswinkel und Rollagewinkel) kommt nur ein Manövergrund-T in Frage, für andere dagegen sind mehrere Grundtypen möglich. Die Bewertung der Manövertypen erfolgt im allgemeinen Fall nach dem Kriterium der schnellstmöglichen Rückführung des Flugzeugs in den zulässigen Flugbereich. Treten nach der Steuerübernahme Störungen auf 6, beispielsweise starke Böen oder ein Triebwerksausfall, kann das System eine Neubewertung der Übernahme-Strategien vornehmen und einen Strategiewechsel 7 durchführen. In diesem Fall erhält das Manöverauswahl-Modul M das Strategiewechselsignal (v) vom Entscheidungsmodul (E). Das Manöverauswahlmodul (M) ersetzt (7C) daraufhin die gespeicherte Überführungsstrategie durch eine günstigere und passt die Manöverinformationen (i) an.

Ein Grenzwertgenerator G berechnet (2) die Flugbereichsgrenze (g) aus den Messgrößen der Sensorik (S). In der Ausführung des Systems nach Anspruch 5 wird die Flugbereichsgrenze (g) durch eine Grenzgeschwindigkeit dargestellt. Im speziellen Ausführungsbeispiel fließen die Messgrößen Flugwindneigungswinkel, Rollagewinkel, Rollrate, Nicklagewinkel, Anstellwinkel, Schiebewinkel, Verzögerung, Höhe über NN und Flugzeugmasse in die Berechnung der Grenzgeschwindigkeit ein. Größere Flugneigungswinkel, größere Flugzeugmasse und stärkere Verzögerung beispielsweise führen zu einer höheren Grenzgeschwindigkeit. Piloteneingaben, beispielsweise Schuberhöhung, werden über deren Auswirkungen auf die Messgrößen, beispielsweise die Verzögerung, erfasst. In der Ausführung des Systems nach den Ansprüchen 3 und 7 wird im Grenzwerigenerator (G) zusätzlich eine Strategiewechselgrenze (w) berechnet. Im speziellen Ausführungsbeispiel handelt es bei der Strategiewechselgrenze um diejenige Geschwindigkeit, bei deren Unterschreiten die Überführungsstrategie Messerflug gewählt werden muss. Im Messerflug ergibt sich bei Geschwindigkeiten nahe Null die größte Überlebenswahrscheinlichkeit.

Im Entscheidungsmodul (E), das mit der Sensorik und dem Grenzwertgenerator (G) verbunden ist, findet die Entscheidung über die Steuerübernahme statt. Dazu wird die Flugbereichsgrenze (g) mit Messgrößen (b) der Sensorik (S) verglichen (3). Wird die Flugbereichsgrenze (g) überschritten, so wird das Steuerübernahmesignal (a) gesetzt. Der Vergleich (3, 5) wird auch nach der Steuerübernahme weiter fortgesetzt. Wird der zulässige Flugbereich wieder erreicht, d.h. die Flugbereichsgrenze wieder unterschritten (5), so wird das Steuerübernahmesignal (a) deaktiviert (nicht gesetzt). In der Ausführung des Systems nach den Ansprüchen 3 und 7 wird zusätzlich die Strategiewechselgrenze (w) mit Messgrößen (b) der Sensorik (S) verglichen. Im speziellen Ausführungsbeispiel wird die aktuelle Geschwindigkeit mit der Grenzgeschwindigkeit verglichen. Wird eine Grenzüberschreitung festgestellt (d.h. ist die aktuelle Geschwindigkeit kleiner als die Grenzgeschwindigkeit), so wird das Steuerübernahmesignal (a) gesetzt und an das Steuereingriffsmodul (A) und den Kommandogenerator (K) gesandt. Durch Vergleich (7B) der aktuellen Geschwindigkeit mit der Strategiewechselgrenze wird ermittelt, ob ein Strategiewechsel erforderlich ist. Unterschreitet die aktuelle Geschwindigkeit die Strategiewechselgrenze (w), wird das Strategiewechselsignal (v) generiert und an das Manöverauswahlmodul (M) gesandt.

Der Kommando-Generator (K) ist mit einem Entscheidungsmodul (E), dem Manöverauswahlmodul (M) und dem Steuereingriffsmodul (A) funktional verbunden.

Das Entscheidungs-Modul (E), das mit dem Grenzwert-Generator (G) und der Sensorik (S) funktional verbunden ist empfängt vom Grenzwert-Generator (G) die berechnete Flugbereichsgrenze (g) sowie von der der Sensorik die Meßgrößen (b) und erzeugt aufgrund eines Vergleichs der Flugbereichsgrenze (g) mit den Meßgrößen (b) ein Steuerübernahmesignal (a), das dieses an das Steuereingriffsmodul (A), den Kommando-Generator (K) und das Manöverauswahl-Modul (M) senden kann.

Der Kommando-Generator (K) erhält vom Entscheidungs-Modul das Steuerübernahmesignal (a) und vom Manöverauswahlmodul die Manöverinformationen (i). Ist das Steuerübernahmesignal (a) gesetzt, berechnet (4) der Kommandogenerator (K) auf Basis der Manöverinformationen (i) die Steuervorgaben (c) für die ausgewählte Überführungsstrategie und liefert sie an das Steuereingriffsmodul (A). In der Ausführung nach den Ansprüchen 2 und 6 ist der Kommandogenerator zusätzlich mit der Sensorik (S) funktional verbunden und umfasst eine Anstellwinkelvorgabe-, eine Schiebewinkelvorgabe- und eine Rollageregelungseinheit. In diesem Fall enthalten die Manöverinformationen (i) eine Angabe über den Rollage-Soll-Winkel und der gemessene Rollage-Ist-Winkel wird von der Sensorik (S) an den Kommandogenerator (K) geliefert. Für Messerflug beispielsweise wird ein Rollage-Soll-Winkel von 90° generiert. Aus Rollage-Ist- und Soll-Winkel berechnet der Kommandogenerator (K) eine Rollratenvorgabe. Anstellwinkel-, Schiebewinkel- und Rollratenvorgabe werden in Steuervorgaben (c) für Pedal und Steuerknüppel umgerechnet und zusammen mit einer Steuervorgabe (c) für den Schubhebel an das Steuereingriffsmodul (A) gesandt.

Das erfindungsgemäße Verfahren dient zum Überführen eines Flugzeugs von einem außerhalb eines vorgegebenen Flugzustandsbereichs in einen innerhalb des Flugzustandsbereichs liegenden Flugzustand aufgrund von Messgrößen einer Sensorik, und umfasst folgende Schritte:
a. Auswählen einer Überführungsstrategiemit zugehöriger Manöverinformation (i) in Abhängigkeit der Messgrößen (b) der Sensorik (S)
b. Berechnen (2) der Flugzustandsbereichs-Grenze (g) aus den Messgrößen (b) der Sensorik (S)
c. Vergleich (3) der Messdaten (b) der Sensorik (S) mit der Flugzustandsbereichs-Grenze (g),
d. Fortführung des Verfahrens bei Schritt a) wenn der Vergleich aus Schritt c) ergibt, daß die Flugzustandsbereichs-Grenze (g) unterschritten und bei Schritt e) wenn der Vergleich aus Schritt c) ergibt, daß die Flugzustandsbereichs-Grenze (g) überschritten ist,
e. Erzeugen eines Steuerübernahmesignals (a) zur Aktivierung eines Steuereingriffsmodul (A) zur Übernahme der Flugzeugsteuerung,
f. Erzeugen (4) einer Steuervorgabe (c) und deren Einspeisung in die Flugzeugsteuerung derart, daß das Flugzeug die ausgewählte Überführungsstrategie umsetzt,
g. Vergleich (3) der Messdaten (b) der Sensorik (S) mit der Flugzustandsbereichs-Grenze (g),
h. Fortführung des Verfahrens bei Schritt f) wenn der Vergleich aus Schritt g) ergibt, daß die Flugzustandsbereichs-Grenze (g) unterschritten und bei Schritt i) wenn der Vergleich aus Schritt g) ergibt, daß die Flugzustandsbereichs-Grenze (g) überschritten ist,
i. Erzeugen eines Steuerübernahmesignals (a) zur Deaktivierung eines Steuereingriffsmodul (A) zur Rückgabe der Flugzeugsteuerung und Fortführung des Verfahrens bei Schritt a).

Als Flugzustandsbereichs-Grenze (g) kann eine Grenzgeschwindigkeit verwendet werden, die in Abhängigkeit der Messgrößen Verzögerung, Nicklagewinkel, Roll-Lagewinkel, Anstellwinkel, Schiebewinkel, Höhe über Normalnull und Flugzeugmasse berechnet wird.

Die Steuervorgabe (c) des Kommando-Generators (K) kann einen Anstellwinkelvorgabe, eine Schiebewinkelvorgabe und/oder eine Roll-Lageregelung umfassen.

Erfindungsgemäß wird die einmal gewählte und gespeicherte Überführungsstrategie als Reaktion auf äußere Störungen (6) durch eine dann günstigere Überführungsstrategie ersetzt, wobei folgende Schritte durchgeführt werden:
- die Berechnung (7A) des Strategiewechselgrenzwerts (w),
- den Vergleich (7B) des Strategiewechselgrenzwerts (w) mit Messgrößen der Sensorik (b), um bei Überschreiten des Strategiewechselgrenzwerts das Strategiewechselsignal (v) zu erzeugen und
- den Ersatz (7C) der gespeicherten Überführungsstrategie durch eine andere mit gleichzeitiger Anpassung der Manöverinformationen (i).

## Patentansprüche

1. System zum Überführen eines Flugzeugs von einem außerhalb eines zulässigen Flugzustandsbereichs in einen innerhalb des zulässigen Flugzustandsbereichs liegenden Flugzustand, das einer Sensorik und einer Steuerungs-Einrichtung des Flugzeugs zugeordnet werden kann, umfassend folgende Komponenten:
- ein Steuereingriffs-Modul (A) zur Übernahme oder Rückgabe der Steuerautorität über das Flugzeug aufgrund eines Steuerübernahmesignals (a) und zum Einspeisen von Steuervorgaben (c) bei gesetztem Steuerübernahmesignal (a);
- ein Manöverauswahl-Modul (M) zur Bereitstellung und Speicherung zumindest einer Überführungsstrategie mit zugehöriger Manöverinformation (i) und zur Auswahl einer Überführungsstrategie in Abhängigkeit von Messgrößen (b) der Sensorik (S);
- einen Grenzwert-Generator (G) zur Berechnung der Flugbereichsgrenze (g) aufgrund von Messgrößen (b) der Sensorik (S);
- ein Entscheidungs-Modul (E), das mit dem Grenzwert-Generator (G) und der Sensorik (S) funktional verbunden ist und von ersterem die berechnete Flugbereichsgrenze (g) sowie von letzterem die Messgrößen (b) empfängt und das aufgrund eines Vergleichs der Flugbereichsgrenze (g) mit den Messgrößen (b) ein Steuerübernahmesignal (a) erzeugt und an das Steuereingriffsmodul (A), den Kommando-Generator (K) und das Manöverauswahl-Modul (M) sendet;
- einen Kommando-Generator (K), der einerseits mit dem Entscheidungs-Modul (E) und dem Manöverauswahl-Modul (M) und andererseits mit dem Steuereingriffs-Modul (A) funktional verbunden ist und bei gesetztem Steuerübernahme-Signal (a) auf Basis der Manöver-Information (i) die Steuervorgaben (c) berechnet und diese an das Steuereingriffs-Modul (A) sendet,
**dadurch gekennzeichnet, dass**
der Grenzwert-Generator (G) zusätzlich Funktionen umfasst, mit denen eine Strategiewechsel-Grenze (w) berechnet und an das Entscheidungs-Modul (E) geliefert werden kann, das Entscheidungs-Modul (E) zusätzlich funktional mit dem Manöverauswahl-Modul verbunden ist und diesem aufgrund des Vergleichs der Strategiewechselgrenze (w) mit Messgrössen (b) der Sensorik (S) ein Strategiewechsel-Signal (v) sendet, wodurch die gespeicherte Überführungsstrategie durch eine andere ersetzt und die Manöverinformation (i) angepasst wird.

2. System nach Anspruch 1, **dadurch gekennzeichnet, dass** der Kommando-Generator (K) zusätzlich funktional mit der Sensorik (S) verbunden ist und eine Lageregelungs-Einheit umfasst, die mit Hilfe von Messgrößen (b) der Sensorik (S), die Steuervorgaben (c) derart berechnet, dass das Flugzeug eine durch die Manöverinformation (i) vorgegebene Fluglage einhält.

3. Verfahren zur Überführung eines Flugzeugs von einem außerhalb eines vorgegebenen Flugzustandsbereichs in einen innerhalb des Flugzustandsbereichs liegenden Flugzustand aufgrund von Messgrößen einer Sensorik, mit folgendem Verfahrensablauf:
a. Auswählen einer Überführungsstrategie mit zugehöriger Manöverinformation (i) in Abhängigkeit der Messgrößen (b) der Sensorik (S)
b. Berechnen (2) der Flugzustandsbereichs-Grenze (g) aus den Messgrößen (b) der Sensorik (S),
c. Vergleich (3) der Messdaten (b) der Sensorik (S) mit der Flugzustandsbereichs-Grenze (g),
d. Fortführung des Verfahrens bei Schritt a) wenn der Vergleich aus Schritt c) ergibt, daß die Flugzustandsbereichs-Grenze (g) unterschritten und bei Schritt e) wenn der Vergleich aus Schritt c) ergibt, daß die Flugzustandsbereichs-Grenze (g) überschritten ist,
e. Erzeugen eines Steuerübernahmesignals (a) zur Aktivierung eines Steuereingriffsmodul (A) zur Übernahme der Flugzeugsteuerung,
f. Erzeugen (4) einer Steuervorgabe (c) und deren Einspeisung in die Flugzeugsteuerung derart, daß das Flugzeug die ausgewählte Überführungsstrategie umsetzt,
g. Vergleich (3) der Messdaten (b) der Sensorik (S) mit der Flugzustandsbereichs-Grenze (g),
h. Fortführung des Verfahrens bei Schritt f) wenn der Vergleich aus Schritt g) ergibt, daß die Flugzustandsbereichs-Grenze (g) unterschritten und bei Schritt i) wenn der Vergleich aus Schritt g) ergibt, daß die Flugzustandsbereichs-Grenze (g) überschritten ist,
i. Erzeugen eines Steuerübernahmesignals (a) zur Deaktivierung eines Steuereingriffsmodul (A) zur Rückgabe der Flugzeugsteuerung und Fortführung des Verfahrens bei Schritt a),
**dadurch gekennzeichnet, dass**
die einmal gewählte und gespeicherte Überführungsstrategie als Reaktion auf äußere Störungen (6) durch eine dann günstigere Überführungsstrategie ersetzt wird, wobei folgende Schritte durchgeführt werden
- Berechnung (7A) des Strategiewechselgrenzwerts (w),
- Vergleich (7B) des Strategiewechselgrenzwerts (w) mit Messgrößen der Sensorik (b), um bei Überschreiten des Strategiewechselgrenzwerts das Strategiewechselsignal (v) zu erzeugen und
- Ersatz (7C) der gespeicherten Überführungsstrategie durch eine andere mit gleichzeitiger Anpassung der Manöverinformationen (i).

4. Verfahren nach Anspruch 3, **dadurch gekennzeichnet, dass** die Flugzustandsbereichs-Grenze (g) durch eine Grenzgeschwindigkeit dargestellt wird, die in Abhängigkeit der Messgrössen Verzögerung, Nicklagewinkel, Roll-Lagewinkel, Anstellwinkel, Schiebewinkel, Höhe über Normalnull und Flugzeugmasse berechnet wird.

5. Verfahren nach Anspruch 3 oder 4, **dadurch gekennzeichnet, dass** Steuervorgabe (c) des Kommando-Generators (K) einen Anstellwinkelvorgabe, eine Schiebewinkelvorgabe und/oder eine Roll-Lageregelung umfasst.

## Claims

1. System for transferring an aircraft from a flight condition outside a permissible flight condition range to a flight condition within the permissible flight condition range, which system may be associated with a sensor system and a control device for the aircraft,
comprising the following components:
- a control action module (A) for transferring or returning the control authority relating to the aircraft on the basis of a control transfer signal (a) and for feeding in control presets (c) when the control transfer signal (a) is set,
- a manoeuvre selection module (M) for providing and storing at least one transfer strategy with associated manoeuvre information (i) and for selection of a transfer strategy as a function of measurement variables (b) from the sensor system (S);
- a limit-value generator (G) for calculating the flight range boundary (g) on the basis of measurement variables (b) from the sensor system (S);
- a decision module (E) which is functionally connected to the limit-value generator (G) and to the sensor system (S), receives from the former the calculated flight range boundary (g), and from the latter the measurement variables (b), and produces a control transfer signal (a) on the basis of a comparison of the flight range boundary (g) with the measurement variables (b), and sends the command generator (K) and the manoeuvre selection module (M) to the control action module (A);
- a command generator (K), which is functionally connected on the one hand to the decision module (E) and to the manoeuvre selection module (M), and on the other hand to the control action module (A) and, when the control transfer signal (a) is set, calculates the control presets (c) on the basis of the manoeuvre information (i) and sends this to the control action module (A),
**characterized in that**
- the limit-value generator (G) additionally comprises functions by means of which a strategy-change boundary (w) is calculated and can be supplied to the decision module (E), the decision module (E) is additionally functionally connected to the manoeuvre selection module and sends a strategy-change signal (v) to it on the basis of the comparison of the strategy-change boundary (w) with measurement variables (b) from the sensor system (S), as a result of which the stored transfer strategy is replaced by another, and the manoeuvre information (i) is adapted.

2. System according to Claim 1, **characterized in that** the command generator (K) is additionally functionally connected to the sensor system (S) and has an attitude control unit which uses measurement variables (b) from the sensor system (S) to calculate control presets (c) such that the aircraft maintains a flight attitude that is preset by the manoeuvre information (i).

3. Method for transferring an aircraft from a flight condition which is outside a predetermined flight condition range to a flight condition which is within the flight condition range, on the basis of measurement variables from a sensor system, having the following method procedure:
a. selection of a transfer strategy with associated manoeuvre information (i) as a function of the measurement variables (b) from the sensor system (S)
b. calculation (2) of the flight condition range boundary (g) from the measurement variables (b) from the sensor system (S)
c. comparison (3) of the measurement data (b) from the sensor system (S) with the flight condition range boundary (g),
d. continuation of the method in step a) if the comparison from step c) indicates that the flight condition range boundary (g) has been undershot, and in step e) if the comparison from step c) indicates that the flight condition range boundary (g) has been overshot,
e. production of a control transfer signal (a) for activation of a control action module (A) for transferring to the aircraft control system,
f. production (4) of a control preset (c), and feeding it into the aircraft control system such that the aircraft implements the selected transfer strategy,
g. comparison (3) of the measurement data (b) from the sensor system (S) with the flight condition range boundary (g),
h. continuation of the method in step f) if the comparison from step g) indicates that the flight condition range boundary (g) has been undershot, and in step i) if the comparison from step g) indicates that the flight condition range boundary (g) has been overshot,
i. production of a control transfer signal (a) for deactivation of a control action module (A) in order to reset the aircraft control system and to continue the method in step a),
**characterized in that** once the transfer strategy has been selected and stored, it is replaced as a reaction to external disturbances (6) by a transfer strategy which is then better, wherein the following steps are carried out:
- calculation (7A) of the strategy-change limit value (w),
- comparison (7B) of the strategy-change limit value (w) with measurement variables from the sensor system (b), in order to produce the strategy-change signal (v) if the strategy-change limit value is overshot, and
- replacement (7C) of the stored transfer strategy by a different one, with the manoeuvre information (i) being adapted at the same time.

4. Method according to Claim 3, **characterized in that** the flight condition range boundary (g) is represented by a limiting speed, which is calculated as a function of the measurement variables delay, the pitch attitude angle, the roll attitude angle, the angle of incidence, the drift angle, the altitude above standard zero and the aircraft mass.

5. Method according to Claim 3 or 4, **characterized in that** the control preset (c) for the command generator (K) comprises an angle of incidence preset, a drift angle preset and/or roll attitude control.

## Revendications

1. Système pour transférer un aéronef d'un état de vol en-dehors d'une plage d'états de vol autorisés à un état de vol à l'intérieur de la plage d'états de vol autorisés, auquel peuvent être associés un dispositif de détection et un dispositif de contrôle de l'aéronef, comprenant les composants suivantes :
- un module d'intervention en contrôle (A) pour prendre en charge ou rendre l'autorité de contrôle de l'aéronef sur la base d'un signal de prise en charge du contrôle (a) et pour diffuser des prescriptions de contrôle (c) lorsque le signal de prise en charge du contrôle (a) est actif,
- un module de sélection de manoeuvre (M) pour délivrer et mémoriser au moins une stratégie de transfert avec une information de manoeuvre (i) correspondante et pour sélectionner une stratégie de transfert en fonction des grandeurs de mesure (b) du dispositif de détection (S) ;
- un générateur de valeurs limites (G) pour calculer la limite de la plage de vol (g) sur la base des grandeurs de mesure (b) du dispositif de détection (S) ;
- un module de décision (E) qui est relié de manière fonctionnelle avec le générateur de valeurs limites (G) et le dispositif de détection (S) et qui reçoit de la part du premier la limite de la plage de vol (g) calculée et de la part du dernier les grandeurs de mesure (b) et qui, en se basant sur une comparaison entre la limite de la plage de vol (g) et les grandeurs de mesure (b), génère un signal de prise en charge du contrôle (a) et l'envoie au module d'intervention en contrôle (A), au générateur de commandes (K) et au module de sélection de manoeuvre (M) ;
- un générateur de commandes (K) qui est relié de manière fonctionnelle d'un côté avec le module de décision (E) et le module de sélection de manoeuvre (M) et de l'autre côté avec le module d'intervention en contrôle (A) et qui, lorsque le signal de prise en charge du contrôle (a) est actif, calcule les prescriptions de contrôle (c) sur la base de l'information de manoeuvre (i) et les envoie au module d'intervention en contrôle (A),
**caractérisé en ce que**
le générateur de valeurs limites (G) comprend des fonctions supplémentaires qui permettent de calculer une limite de changement de stratégie (w) et de la délivrer au module de décision (E), le module de décision (E) étant en plus relié de manière fonctionnelle avec le module de sélection de manoeuvre et envoie à celui-ci un signal de changement de stratégie (v) en se basant sur la comparaison entre la limite de changement de stratégie (w) avec les grandeurs de mesure (b) du dispositif de détection (S), ce qui entraîne le remplacement de la stratégie de transfert mémorisée par une autre et l'adaptation de l'information de manoeuvre (i).

2. Système selon la revendication 1, **caractérisé en ce que** le générateur de commandes (K) est en plus relié de manière fonctionnelle avec le dispositif de détection (S) et comprend une unité de régulation de la position qui, à l'aide des grandeurs de mesure (b) du dispositif de détection (S), calcule les prescriptions de contrôle (c) de telle sorte que l'aéronef maintient une position de vol prédéfinie par l'information de manoeuvre (i).

3. Procédé pour transférer un aéronef d'un état de vol en-dehors d'une plage d'états de vol autorisés à un état de vol à l'intérieur de la plage d'états de vol autorisés en se basant sur les grandeurs mesurées d'un dispositif de détection, comprenant les étapes suivantes :
a. Sélection d'une stratégie de transfert avec une information de manoeuvre (i) correspondante en fonction des grandeurs de mesure (b) du dispositif de détection (S) ;
b. Calcul (2) de la limite de la plage d'états de vol (g) à partir des grandeurs de mesure (b) du dispositif de détection (S) ;
c. Comparaison (3) des données de mesure (b) du dispositif de détection (S) avec la limite de la plage d'états de vol (g) ;
d. Poursuite du procédé à l'étape a) lorsque la comparaison de l'étape c) a pour résultat que la limite de la plage d'états de vol (g) est franchie vers le bas et à l'étape e) lorsque la comparaison de l'étape c) a pour résultat que la limite de la plage d'états de vol (g) est franchie vers le haut ;
e. Génération d'un signal de prise en charge du contrôle (a) pour activer un module d'intervention en contrôle (A) pour prendre en charge le contrôle de l'aéronef ;
f. Génération (4) d'une prescription de contrôle (c) et diffusion de celle-ci dans le contrôle de l'aéronef de telle sorte que l'aéronef met en oeuvre la stratégie de transfert sélectionnée ;
g. Comparaison (3) des données de mesure (b) du dispositif de détection (S) avec la limite de la plage d'états de vol (g) ;
h. Poursuite du procédé à l'étape f) lorsque la comparaison de l'étape g) a pour résultat que la limite de la plage d'états de vol (g) est franchie vers le bas et à l'étape i) lorsque la comparaison de l'étape g) a pour résultat que la limite de la plage d'états de vol (g) est franchie vers le haut ;
i. Génération d'un signal de prise en charge du contrôle (a) pour désactiver un module d'intervention en contrôle (A) en vue de rendre le contrôle de l'aéronef et poursuite du procédé à l'étape a),
**caractérisé en ce que**
la stratégie de transfert précédemment sélectionnée et mémorisée est remplacée par une stratégie de transfert alors plus favorable en réaction à des perturbations extérieures (6), les étapes suivantes étant alors exécutées .
- Calcul (7A) de la valeur limite de changement de stratégie (w),
- Comparaison (7B) de la valeur limite de changement de stratégie (w) avec les grandeurs de mesure (b) du dispositif de détection afin de générer le signal de changement de stratégie (v) en cas de dépassement de la valeur limite de changement de stratégie et
- Remplacement (7C) de la stratégie de transfert mémorisée par une autre avec adaptation simultanée des informations de manoeuvre (i).

4. Procédé selon la revendication 3, **caractérisé en ce que** la limite de la plage d'états de vol (g) est représentée par une vitesse limite qui est calculée en fonction des grandeurs de mesure Ralentissement, Angle de tangage, Angle de roulis/position, Angle d'incidence, Angle de dérive, Altitude en atmosphère standard et Masse de l'aéronef.

5. Procédé selon la revendication 3 ou 4, **caractérisé en ce que** la prescription de contrôle (c) du générateur de commandes (K) comprend une prescription d'angle d'attaque, une prescription d'angle de dérive et/ou une régulation du roulis/de la position.
